# DEMANDE DE BREVET EUROPEEN

(11) **EP 4 174 474 A1**
(43) Date de publication de la demande: **03.05.2023**
(21) Numéro de dépôt: 22204307.7
(22) Date de dépôt: 28.10.2022
(51) Int. Cl.: G01N 21/64, G01N 21/95

(54) **PROCÉDÉ DE DÉTERMINATION DE LA POSITION D'AU MOINS UNE DÉFECTIVITÉ SUR DES SUBSTRATS SEMI-CONDUCTEURS, PROCÉDÉ DE DÉTECTION ET DISPOSITIF ASSOCIÉS**

(30) Priorité: 02.11.2021 FR 2111626
(71) Demandeur: Commissariat à l'Énergie Atomique et aux Énergies Alternatives, 75015 Paris (FR)
(72) Inventeur: GIGLIA, Valentin, 38054 Grenoble Cedex 09 (FR); VARACHE, Renaud, 38054 Grenoble Cedex 09 (FR); VEIRMAN, Jordi, 38054 Grenoble Cedex 09 (FR)
(74) Mandataire: Cabinet Camus Lebkiri

(57) **Abrégé**

Un aspect de l'invention concerne un procédé de détermination de la position d'au moins une défectivité sur des substrats semi-conducteurs dans une chaine de production. Le procédé est mis en œuvre à l'aide d'au moins un substrat témoin comportant une première face et une deuxième face, et comprend, pour chaque substrat témoin, une étape de caractérisation par photoluminescence de chaque face du substrat témoin en au moins un point de la chaine de production. Le procédé comprend également une étape de détermination de la position et de la face du substrat témoin sur laquelle est situé chaque défaut considéré lors de l'étape de caractérisation.

## Description

### DOMAINE TECHNIQUE DE L'INVENTION

Le domaine technique de l'invention est celui de la détection des défectivités sur les substrats (par exemple les plaquettes de silicium) d'une chaine de production.

La présente invention concerne un procédé de détection de la position d'une défectivité et en particulier un procédé dans lequel, lors de la détection, les durées de vie des porteurs de charges sont faibles dans le substrat.

### ARRIERE-PLAN TECHNOLOGIQUE DE L'INVENTION

Lors de la production d'un dispositif électronique, le substrat utilisé pour cette fabrication va être déplacé pour effectuer les différentes étapes du procédé de fabrication. Lors de son transport, le substrat (par exemple, une plaquette de silicium) est en contact avec des éléments de manipulation tels que courroies, préhenseurs à vide, plateaux, etc. Ces contacts peuvent détériorer la surface du substrat en abrasant la surface ou en déposant (voire en incrustant) des contaminants sur cette surface (particules, dépôts divers, etc.). Ces observations s'appliquent également aux substrats après passivation qui peuvent également subir une détérioration due aux manipulations et aux transports (rayures, écrêtage de pyramides ou de texturation, etc.). Dans la suite, les défauts résultant de cette dégradation de surface sont englobés sous le terme « défectivité ».

Or, la surface du substrat (avant ou après passivation) est dégradée au niveau de cette défectivité de sorte que toute étape effectuée sur les zones concernées par ces défectivités sera de moindre qualité. Par exemple une couche nanométrique (par exemple déposée par PECVD - Plasma Enhanced Chemical Vapor Deposition en anglais) ayant pour but de passiver la surface déposée sur ces zones-là sera de moindre qualité (contaminée, mauvaise adhérence, dépôt localement absent, etc.) par rapport une couche de passivation déposée sur une zone sans défectivité.

Il convient donc de supprimer ou réduire cette défectivité en optimisant certaines étapes de fabrication. Cette optimisation nécessite d'abord de connaitre la position précise de la ou des défectivités sur le substrat de sorte à identifier l'étape ou les étapes responsables de leur création.

Pour se faire, le document P.Tomanek et al., « Detection and Localization of Defects in Monocrystalline Silicon Solar Cell, Advances in Optical Technologies » (2010) propose une méthode de caractérisation de la défectivité par couplage de mesures électriques et optiques. Bien qu'efficace, cette méthode ne peut être réalisée qu'après la mise en place d'un contact électrique au niveau du substrat à caractériser (avec une grille métallique par exemple) ce qui limite son champ d'application. De plus, elle nécessite des manipulations additionnelles du substrat qui pourraient ajouter de la défectivité supplémentaire. Pour finir, sa mise en place dans une chaine de production industrielle demanderait d'importants investissements, cette méthode ne s'appuyant sur aucune caractérisation usuellement utilisée dans l'industrie.

De manière alternative, le document Chen et al. « Solar cell surface defect inspection based on multispectral convolutional neural network », J. Intell. Manuf. (2020) propose quant à lui une technique de caractérisation par une analyse multispectrale de la surface du substrat. Cette technique présente l'avantage de ne nécessiter que peu de manipulations et n'ajoute donc pas de défectivité. De plus, elle est rapide, ce qui la rend compatible avec des cadences industrielles. Toutefois, cette caractérisation ne permet l'identification de défauts que s'ils sont sur la surface du substrat et ne permet donc pas d'identifier ceux liés à la présence de contaminants situés sous les couches de passivation par exemple.

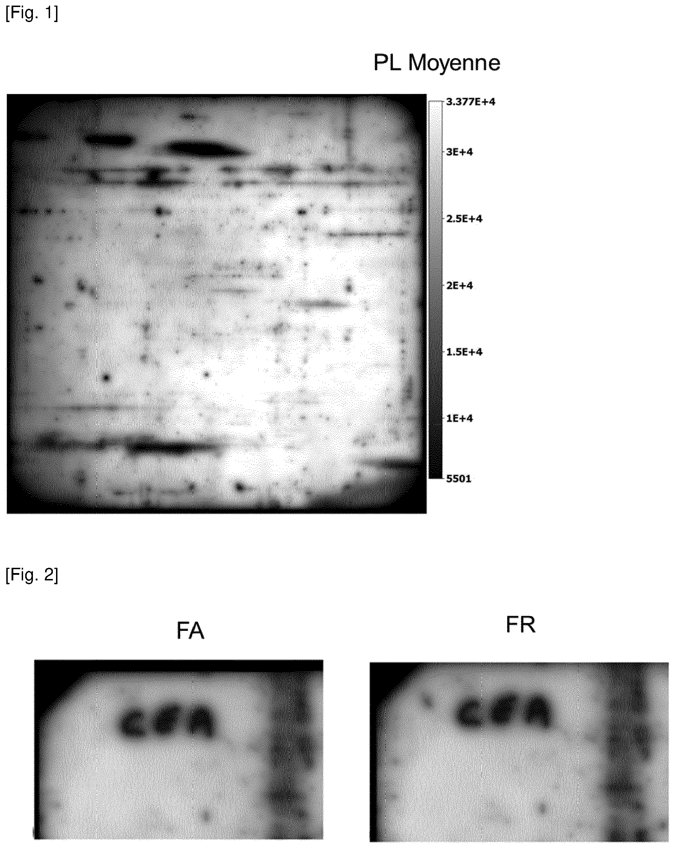

A l'inverse, la photoluminescence est une technique de caractérisation des défauts éprouvée qui permet l'identification de tous types de défauts. En outre, elle ne nécessite que peu de manipulations et est compatible avec des cadences industrielles. A titre d'illustration, la [Fig. 1] montre une image de photoluminescence typique d'un substrat ayant subi une dégradation par le système de transport et ayant été successivement passivée par une couche d'environ 10 nm de silicium amorphe hydrogéné (a-Si:H - dépôt PECVD). Sur cette figure, les zones sombres (associées à une faible photoluminescence noté PL sur la [Fig.1]) correspondent aux zones dégradées, alors que les zones claires (associées à une forte photoluminescence) correspondent aux zones où l'état de surface a été préservé et où la passivation est de bonne qualité.

Classiquement la longueur d'onde utilisée pour l'excitation des électrons dans le substrat à caractériser est dans le proche infrarouge (environ 900 nm). Cette longueur d'onde a une profondeur de pénétration dans le silicium de l'ordre de 80 µm (la profondeur de pénétration est une donnée statistique qui représente la profondeur à laquelle 63% des photons ont été absorbés). Aussi, dans ce matériau, bien que la photogénération se fasse principalement proche de la surface exposée à la lumière, une part non négligeable se produit plus profondément dans la cellule puisque 37% des photons sont absorbés au-delà de la profondeur de pénétration.

De plus, lorsque le matériau utilisé pour la fabrication est de très bonne qualité (c'est le cas notamment pour la fabrication de dispositifs photovoltaïques), la longueur de diffusion des porteurs qui y sont photogénérés est en général très grande devant l'épaisseur du substrat utilisé. Par conséquent, les porteurs photogénérés lors de l'excitation lumineuse ont statistiquement autant de chance de recombiner sur un défaut situé sur la face éclairée que sur un défaut situé sur la face opposée.

Aussi, la mise en œuvre de la technique de photoluminescence rend difficile l'identification de la surface (avant ou arrière) du substrat sur laquelle sont situés les défauts. Cette difficulté est illustrée à la [Fig. 2] qui montre la comparaison d'une première image relative à un défaut en face avant (à gauche) et d'une image relative à un défaut en face arrière (à droite). En outre, cette difficulté devrait aller croissante avec l'évolution technologique qui prévoit une augmentation de la durée de vie des porteurs de charge dans les matériaux ainsi qu'un amincissement des substrats utilisés pour la fabrication des dispositifs semi-conducteurs, par exemple des cellules photovoltaïques.

Il existe donc un besoin d'une méthode compatible avec une fabrication industrielle et permettant d'identifier la position (incluant la face) d'une ou plusieurs défectivités sur un substrat dans une chaine de fabrication.

### RESUME DE L'INVENTION

L'invention offre une solution aux problèmes évoqués précédemment, en modulant, lors de la caractérisation, la longueur d'onde utilisée et/ou la durée de vie (et donc la longueur de diffusion) des porteurs de charge dans le substrat témoin utilisé de sorte à pouvoir différentier le signal d'un défaut selon qu'il se situe sur l'une ou l'autre des faces du substrat témoin.

Un aspect de l'invention concerne un procédé de détermination de la position d'au moins une défectivité sur des substrats semi-conducteurs dans une chaine de production, le procédé étant mis en œuvre à l'aide d'au moins un substrat témoin comportant une première face et une deuxième face, le procédé comprenant, pour chaque substrat témoin :
- une étape de caractérisation par photoluminescence de chaque face du substrat témoin en au moins un point de la chaine de production, cette étape de caractérisation comprenant, pour au moins un défaut présent sur le substrat témoin ;
- une sous-étape de mesure du signal photoluminescent du défaut lorsque la première face du substrat témoin est illuminée de sorte à déterminer une première amplitude associée au défaut mesurée;
- une sous-étape de mesure du signal photoluminescent du défaut lorsque la deuxième face du substrat témoin est illuminée de sorte à déterminer une deuxième amplitude associé au défaut mesurée.

On entend par amplitude le rapport entre le signal mesuré sur une région sans défaut et le signal mesuré sur le défaut.

De plus, dans le procédé selon un premier aspect de l'invention, la durée de vie des porteurs de charge lors de la caractérisation et/ou la longueur d'onde utilisée lors de la caractérisation étant ajustées de sorte que le rapport entre l'amplitude la plus élevée et l'amplitude la plus faible, dit contraste de mesure, est supérieur à une valeur seuil, elle-même supérieure ou égale à 1.

Le procédé selon un premier aspect de l'invention comprend ensuite :
- à partir de la valeur des amplitudes déterminées précédemment, une étape de détermination de la position, sur le substrat témoin, de chaque défaut considéré lors de l'étape de caractérisation ; et
- à partir de la face associée à chaque défaut présent sur chaque substrat témoin, une étape de détermination de la position associée à chaque défectivité.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Dans un mode de réalisation, une intensité lumineuse supérieure à 20 équivalents soleils est utilisée lors de l'étape de caractérisation de sorte à induire, lors de cette étape, une baisse de la durée de vie des porteurs de charge dans le substrat témoin par augmentation du taux de recombinaison par effet Auger.

Dans un mode de réalisation, le substrat témoin est un substrat ayant une faible durée de porteur de charge.

Dans un mode de réalisation, la longueur de diffusion des porteurs de charge du substrat témoin lors de l'étape de caractérisation est inférieure à l'épaisseur du substrat témoin.

Dans un mode de réalisation, lors de l'étape de caractérisation, l'ajustement de la durée de vie des porteurs de charge et de la longueur d'onde utilisée est effectué en deux phases :
- une première phase lors de laquelle l'ajustement n'est effectué que sur la durée de vie des porteurs de charge ; et
- lorsque l'ajustement de la durée de vie des porteurs de charge n'est plus possible et que le contraste est inférieur à la valeur seuil, une deuxième phase durant laquelle l'ajustement est effectué sur la longueur d'onde utilisé.

Un deuxième aspect de l'invention concerne Procédé de fabrication d'un dispositif semi-conducteur à l'aide d'une chaine de fabrication (CP), le procédé de fabrication comprenant, en au moins un point de la chaine de fabrication (CP), une étape de mise en œuvre du procédé (100) de détermination de la position d'au moins une défectivité selon un premier aspect de l'invention.

Outre les caractéristiques qui viennent d'être évoquées dans le paragraphe précédent, le procédé selon un deuxième aspect de l'invention peut présenter une ou plusieurs caractéristiques complémentaires parmi les suivantes, considérées individuellement ou selon toutes les combinaisons techniquement possibles.

Dans un mode de réalisation, le dispositif semi-conducteur est fabriqué à partir d'un substrat à grande durée de vie des porteurs de charge et l'étape de mise en œuvre du procédé selon un premier aspect de l'invention est précédée d'une étape d'introduction, dans la chaine de fabrication, d'au moins un substrat témoin à faible durée de vie des porteurs de charge.

Dans un mode de réalisation, le dispositif semi-conducteur est un dispositif photovoltaïque.

Un troisième aspect de l'invention concerne un dispositif de détermination par photoluminescence de la position d'au moins une défectivité sur des substrats semi-conducteurs d'une chaine de fabrication comprenant au moins un moyen d'illumination, au moins un moyen d'acquisition et des moyens configurés pour mettre en œuvre un procédé selon un premier aspect ou un deuxième aspect de l'invention

Un quatrième aspect de l'invention concerne un programme d'ordinateur comprenant des instructions qui conduisent le dispositif selon un troisième aspect de l'invention à exécuter les étapes du procédé selon un premier aspect de l'invention.

Un cinquième aspect de l'invention concerne un support lisible par ordinateur, sur lequel est enregistré le programme d'ordinateur selon un quatrième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
La [Fig. 1] montre une image par photoluminescence des défauts sur un wafer.
La [Fig. 2] illustre l'absence de différence entre le signal photoluminescent d'un défaut en face avant et ce même signal pour un défaut en face arrière avec les techniques de l'art antérieur.
La [Fig. 3] montre un logigramme d'un procédé selon l'invention.
La [Fig. 4] montre une représentation schématique d'une chaine de production dans laquelle se trouve des substrats témoins pour la mise en œuvre d'un procédé selon l'invention.
Les [Fig. 5A] et [Fig. 5B] illustrent la mesure de l'atténuation pour un défaut donné pour chaque face d'un substrat témoin.
Les [Fig. 6A] et [Fig. 6B] montrent l'évolution du contraste en fonction de la durée de vie des porteurs ([Fig. 6A], pour une longueur d'onde de 700 nm) et en fonction de la longueur d'onde ([Fig. 6B], pour une durée de vie des porteurs de charge de 10µs).
Les [Fig. 7A] à [Fig. 7B] illustrent l'influence de la durée de vie des porteurs de charge, de la longueur d'onde ou du flux lumineux sur le contraste mesuré pour un défaut donné.
Les [Fig. 8A] à [Fig. 8B] illustrent le contraste entre le signal photoluminescent d'un défaut en face avant ([Fig. 8A]) et ce même signal pour un défaut en face arrière ([Fig. 8B]) avec le procédé selon l'invention.
La [Fig. 9A] montre une représentation schématique d'un dispositif selon un premier mode de réalisation.
La [Fig. 9B] montre une représentation schématique d'un dispositif selon un premier mode de réalisation.

### DESCRIPTION DETAILLEE

Les figures sont présentées à titre indicatif et nullement limitatif de l'invention. Sauf précision contraire, un même élément apparaissant sur des figures différentes présente une référence unique.

### Procédé de détermination de la position d'au moins une défectivité

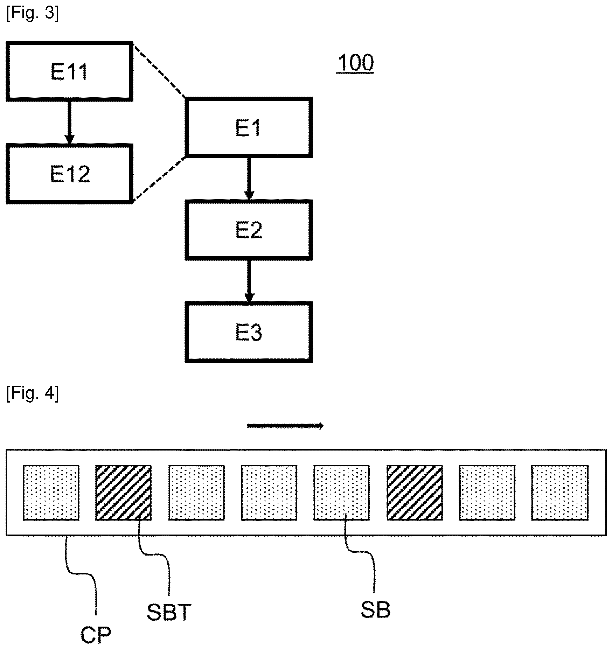

Un premier aspect de l'invention illustré à la [Fig. 3] et à la [Fig. 4] concerne un procédé 100 de détermination de la position d'au moins une défectivité (c'est-à-dire un défaut tel que décrit en introduction) sur des substrats semi-conducteurs SB dans une chaine de production CP. On entend par position, la face du substrat SB sur laquelle est située la défectivité ainsi que sa localisation sur cette face. Comme déjà mentionné, de manière générale, l'état de la technique permet de déterminer la localisation d'une défectivité sans pour autant connaitre à quelle face fait référence cette localisation (autrement dit, l'état de la technique permet de connaitre la localisation des défectivités dans un plan, mais ne permet pas de déterminer à quelle face du substrat ce plan est relatif).

Le procédé 100 selon l'invention est mis en œuvre à l'aide d'au moins un substrat témoin SBT comportant une première face FA et une deuxième face FR. Comme cela sera détaillé dans la suite, un substrat témoins SBT peut être un substrat choisi parmi les substrats SB déjà présents sur la ligne de production et destinés à produire un dispositif final (par exemple, un dispositif photovoltaïque) ou bien alors un substrat inséré sur la chaine de production avec pour seule fin la mise en œuvre du procédé 100 selon l'invention. Dans ce dernier cas, le substrat témoin SBT est un substrat dont la durée de vie des porteurs de charge est largement inférieure à la durée de vie des porteurs de charge des substrats SB déjà présents sur la chaine de production CP et destinés à la fabrication un dispositif final (par exemple au moins dix fois inférieure, au moins cent fois inférieure, voire au moins mille fois inférieure - par exemple, pour une ligne de production sur laquelle des substrats dont la durée de vie des porteurs de charges est de quelques millisecondes, la durée de vie des porteurs de charge du substrat témoin pourra être d'un dizaine de microseconde mesurée à un taux d'injection Δn=5×10¹⁴cm⁻³). Par exemple, la durée de vie des porteurs de charge du ou des substrat témoins SBT peut être inférieure à 0.1 ms tandis que la durée de vie des autres substrat SB déjà présents sur la chaine de production CP est supérieure ou égale à 1ms, par exemple comprise entre 1ms et 10ms. Un tel substrat témoin SBT peut par exemple être obtenus par activation de donneurs thermiques ou encore par introduction de contaminants métalliques lors de la fabrication du lingot de silicium.

Une illustration d'une chaine de production CP sur laquelle sont présents des substrats classiques SB (c'est-à-dire ne participant pas à la mise en œuvre de l'invention) et des substrats témoins SBT est donnée à la [Fig. 4]. Encore une fois, il est bien entendu que, dans certains modes de réalisation de l'invention, les substrats témoins SBT sont identiques aux substrats classiques SB à ceci près qu'ils vont subir une étape de caractérisation par photoluminescence. En revanche, dans d'autres modes de réalisation, lorsque la durée de vie des porteurs de charges des substrats témoins SBT est faible, les substrats témoins SBT sont différents des substrats classiques SB présents sur la chaine de production et ils ont pour seul but la mise en œuvre du procédé 100 selon l'invention.

### Caractérisation de chaque substrat témoin par photoluminescence

Le procédé 100 selon l'invention comprend, pour chaque substrat témoin SBT, une étape E1 de caractérisation par photoluminescence de chaque face du substrat témoin SBT en au moins un point de la chaine de production CP. De préférence, cette caractérisation est effectuée en plusieurs points de la chaine de production CP afin de déterminer plus facilement les manipulations ayant introduit les différentes défectivités déterminées au moyen du procédé 100 selon l'invention.

Plus particulièrement, l'étape E1 de caractérisation comprend, pour au moins un défaut DE présent sur le substrat témoin SBT, une sous-étape E11 de mesure du signal photoluminescent du défaut DE lorsque la première face FA du substrat témoin SBT est illuminé de sorte à déterminer une première amplitude A_{FA} associée au défaut DE mesurée. De préférence, cette sous-étape E11 est mise en œuvre pour une pluralité de défauts DE présents sur le substrat témoin SBT.

L'étape E1 de caractérisation comprend également, pour le ou les défauts DE considérés lors de la sous-étape E11 précédente, une sous-étape E12 de mesure du signal photoluminescent du défaut DE lorsque la deuxième face FR du substrat témoin SBT est illuminée de sorte à déterminer une deuxième amplitude A_{FR} associée au défaut DE mesurée.

La mesure de chaque face peut être effectuée en retournant le substrat témoin SBT entre la mesure de la première face FA et la mesure de la deuxième face FR. Dans ce cas, le dispositif utilisé pour la mise en œuvre de l'invention comprend généralement un moyen de manipulation configuré pour effectuer ce retournement. Cependant, cette opération peut également être réalisée par un opérateur.

Alternativement, la mesure de chaque face FA/FR peut être effectuée en utilisant deux moyens d'illumination et deux moyens d'acquisition MA. Dans ce cas, le dispositif utilisé pour la mise en œuvre de l'invention comprend un premier moyen d'illumination configuré pour illuminer la première face et un premier moyen d'acquisition configuré pour acquérir le signal en provenance de cette première face. Il comprend également un deuxième moyen d'illumination configuré pour illuminer la deuxième face et un deuxième moyen d'acquisition configuré pour acquérir le signal en provenance de cette deuxième face.

Alternativement, la mesure de chaque face FA/FR peut être effectuée en utilisant d'un moyen d'illumination et deux moyens d'acquisition MA. Dans ce cas, le dispositif utilisé pour la mise en œuvre de l'invention comprend un moyen d'illumination configuré pour illuminer la première face, un premier moyen d'acquisition configuré pour acquérir le signal en provenance de cette première face et un deuxième moyen d'acquisition configuré pour acquérir le signal en provenance de la deuxième face, l'acquisition se faisant alors simultanément sur la première face et la deuxième face.

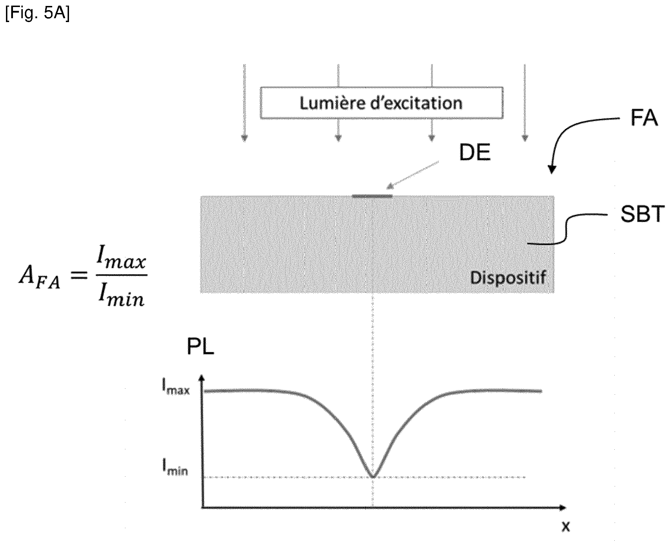

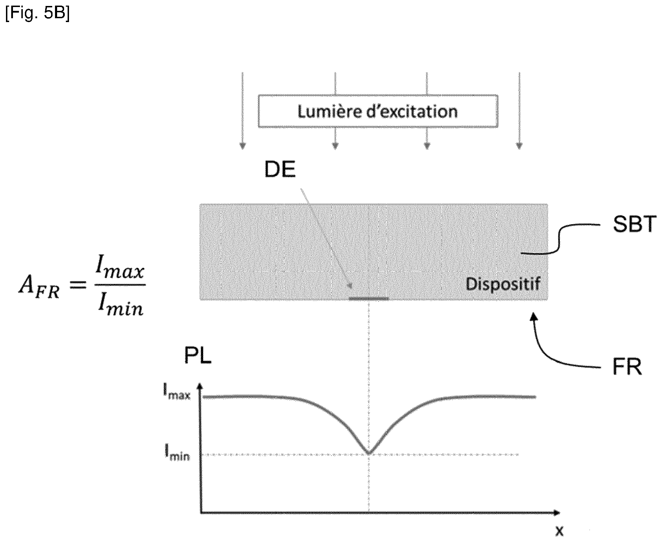

Comme illustré à la [Fig. 5A] et à la [Fig. 5B], l'amplitude évoquée dans les deux sous-étapes 1E11-1E12 qui précèdent est définie comme le rapport entre l'intensité du signal mesuré sur une région sans défaut et l'intensité du signal mesuré sur le défaut.

Par ailleurs, lors de l'étape E1 de caractérisation, la durée de vie des porteurs de charge et/ou la longueur d'onde de la lumière utilisée pour la photoluminescence sont ajustées de sorte que le rapport entre l'amplitude la plus élevée et l'amplitude la plus faible pour un défaut donné, ci-après contraste C_{AV/AR}, est supérieur à une valeur seuil, cette valeur seuil étant supérieure ou égale à 1, de préférence supérieure ou égale à 1.05 voire supérieur ou égale à 1.06 (cette valeur permettant en général une identification visuelle), voire encore supérieure ou égale à 1.1.

Aussi, le ou les moyens d'illumination du dispositif utilisé pour la mise en œuvre du procédé selon l'invention sont généralement configurés pour pouvoir moduler leur flux et/ou la longueur d'onde utilisée pour illuminer le substrat témoin SBT. Dans un mode de réalisation, la longueur d'onde utilisée est supérieure ou égale à 400 nm. En effet, pour certaines cellules, en dessous de 400 nm, les photons sont principalement absorbés par la ou les couches passivantes et non le substrat témoin SBT à caractériser. Il est cependant intéressant de noter que, lorsque le substrat témoin SBT est un substrat à faible durée de vie des porteurs de charge, alors la modulation des paramètres de l'illumination, bien que souhaitable car elle fournit un degré de liberté supplémentaire, n'est pas nécessaire à la mise en œuvre de l'invention.

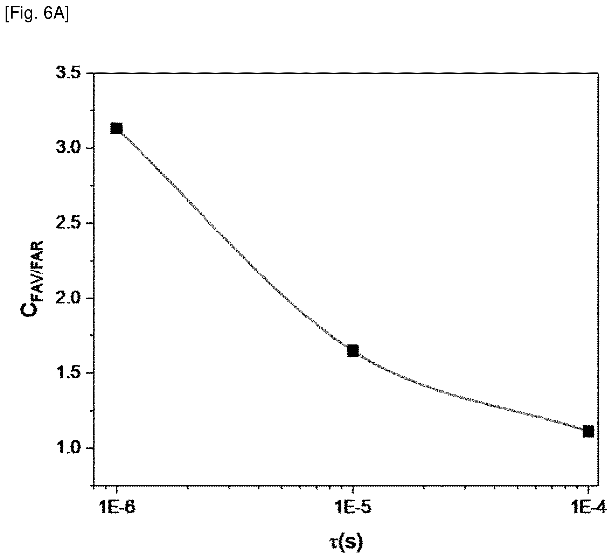

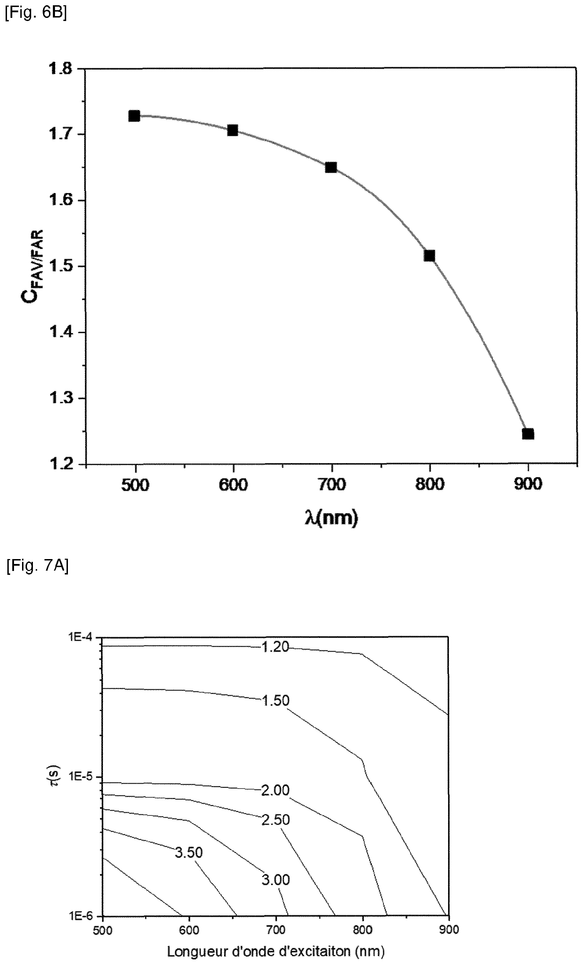

Les [Fig. 6A] et [Fig. 6B] montrent l'évolution du contraste en fonction de la durée de vie des porteurs de charge ([Fig. 6A], pour une longueur d'onde de 700 nm) et en fonction de la longueur d'onde ([Fig. 6B], pour une durée de vie des porteurs de charge de 10µs). Ces deux figures font clairement apparaitre comment l'ajustement de la valeur de ces paramètres permet d'obtenir le contraste désiré.

L'ajustement des paramètres évoqués précédemment (durée de vie des porteurs de charge et longueur d'onde) pourra par exemple se faire en répétant les sous-étapes 1E11,1E12 décrites précédemment en faisant varier la durée de vie des porteurs de charge et/ou la longueur d'onde entre chaque itération jusqu'à l'obtention d'un contraste supérieur à la valeur seuil. Alternativement, les paramètres permettant d'obtenir le contraste souhaité pourront être déterminés par simulation (puis vérifiés expérimentalement avec ajustement des paramètres si nécessaire).

Dans un mode de réalisation, afin améliorer encore le contraste, la longueur de diffusion des porteurs de charge du substrat témoin SBT lors de l'étape 1E1 de caractérisation est inférieure à l'épaisseur du substrat témoin SBT. Cette longueur de diffusion peut être ajustée en choisissant un substrat témoin SBT ayant une telle longueur de diffusion ou bien encore en ajustant le flux utilisé lors de l'illumination. Autrement dit, dans ce mode de réalisation, la durée de vie des porteurs de charges est réduite de sorte que la longueur de diffusion des porteurs de charge du substrat témoin SBT lors de l'étape 1E1 de caractérisation est inférieure à l'épaisseur du substrat témoin SBT

Dans un mode de réalisation, le procédé comprend également une étape de traitement des images acquises lors de la caractérisation afin par exemple de faciliter la comparaison entre les différentes caractérisations.

### Détermination de la position (incluant la face) de chaque défaut

A l'issue de l'étape E1 de caractérisation, l'amplitude mesurée en éclairant chaque face FA/FR du substrat témoin SBT est connue. De plus, la durée de vie des porteurs de charge est choisie de sorte à établir un contraste en les signaux mesurés pour chaque face. Ainsi, comme le montrent d'ailleurs les [Fig. 5A] et [Fig. 5B], l'amplitude la plus forte est obtenue lorsque le défaut DE est situé sur la face illuminée. Aussi, le procédé 100 selon l'invention comprend, à partir de la valeur des amplitude déterminées lors de l'étape 1E1 de caractérisation, une étape 1E2 de détermination de la position de chaque défaut DE considéré. On entend par défaut considéré le ou les défauts pour lesquels l'amplitude et le contraste ont été déterminés lors de l'étape E1 de caractérisation.

### Détermination de la position associée à chaque défectivité

Comme mentionné en introduction, dans l'état de la technique, l'image par photoluminescence permet de déterminer la localisation d'un défaut dans un plan sans pour autant déterminer la face sur laquelle est présent ce défaut. Or, la présente invention permet de s'affranchir de cette limitation. Elle permet donc de déterminer la face associée à chaque défaut et la localisation du défaut sur cette face. En faisant l'hypothèse raisonnable que les défauts, par exemple les défauts récurrents, observés sur le ou les substrats témoins SBT sont des défectivités, c'est-à-dire des défauts dus aux manipulations subies par le ou les substrats témoins SBT, la position des défauts ainsi détectés correspond à la position des défectivités. Aussi, le procédé 100 comprend également, à partir de la position associée à chaque défaut DE présents sur chaque substrat témoin SBT, une étape 1E3 de détermination de la position associée à chaque défectivité.

### Ajustement de la durée de vie des substrats témoins et la longueur d'onde

Comme mentionné précédemment, lors de l'étape E1 de caractérisation, la durée de vie des porteurs de charge et/ou la longueur d'onde sont ajustées de sorte que le rapport entre l'atténuation la plus élevée et l'atténuation la plus faible pour un défaut donné, aussi noté contraste C_{AV/AR}, est supérieur à une valeur seuil, cette valeur seuil étant supérieure ou égale à 1, de préférence supérieure ou égale à 1.05, voire supérieur ou égale à 1.06, voire encore supérieure ou égale à 1.1.

Concernant la durée de vie des porteurs de charge, cet ajustement peut se faire en adoptant l'une des trois solutions suivantes : en choisissant un substrat ayant intrinsèquement une durée de vie de porteurs de charges adaptée ; en faisant en sorte que la durée de vies des porteurs de charge soit modifiée lors de l'étape de caractérisation de sorte à produire le contraste souhaité ; ou une combinaison des deux solutions précédentes. Concernant la lumière, cet ajustement se traduit généralement par une réduction de la longueur d'onde utilisée.

De préférence, l'ajustement est effectué en deux temps : dans un premier temps, l'ajustement n'est effectué que sur la durée de vie des porteurs de charge (en changeant de substrat témoin et/ou en augmentant le flux lumineux). Puis, lorsque l'ajustement de la durée de vie des porteurs de charge n'est plus possible (par exemple, le flux maximum est atteint ou aucun substrat témoin avec une durée de vie plus basse n'est pas disponible) et que le contraste souhaité n'est pas atteint, alors l'ajustement est effectué sur la longueur d'onde utilisée jusqu'à atteindre le contraste souhaité.

### Ajustement de la durée de vie des porteurs de charge

Dans un mode de réalisation, les substrats témoins SBT ont une durée de vie des porteurs de charge faible. On entend par faible durée de vie une durée de vie inférieure à 1 ms, de préférence comprise entre 1 ms non-inclus et 1 µs inclus (une durée de vie plus faible étant difficile à obtenir de manière homogène). Dans ce mode de réalisation, le ou les substrats témoins SBT doivent être introduits dans la chaine de production CP en plus des substrats SB destinés à la fabrication de dispositifs. La chaine de production CP comporte alors des substrats SB à longue durée de vie qui ne sont pas utilisés pour la mise en œuvre de l'invention et un ou plusieurs substrats témoins SBT à faible durée de vie utilisés pour la mise en œuvre du procédé 100 selon l'invention.

Dans ce mode de réalisation, l'ajustement doit alors être compris comme l'insertion d'un substrat témoin SBT ayant une durée de vie des porteurs de charge réduite par rapport au substrat témoin SBT utilisé lors de l'itération précédente de l'étape 1E1 de caractérisation (et durant laquelle le contraste souhaité n'a pas été atteint).

### Ajustement de la durée de vie des porteurs de charge modifiée lors de la caractérisation

Dans un mode de réalisation, la source lumineuse utilisée pour l'étape de caractérisation photoluminescente est une source à fort flux. Autrement dit, lors de l'étape E1 de caractérisation, le substrat témoin SBT est soumis à un rayonnement à fort flux. On entend par fort flux une intensité lumineuse supérieure à 20 équivalents soleils (la durée de vie étant alors approximativement égale à 150 µs), de préférence supérieure ou égale à 100 équivalents soleils (la durée de vie étant alors approximativement égale à 50 µs - par exemple, comme le montre la [Fig. 7A], pour cette intensité, le contraste est similaire au contraste obtenu à 900 nm pour une durée de vie de 50 µs). L'utilisation d'un fort flux de photons permet de faire diminuer la durée de vie des porteurs de charge par effet Auger.

Dans ce mode de réalisation, l'ajustement doit alors être compris comme la modification du flux de photons incidents par rapport au flux utilisé lors de l'itération précédente de l'étape 1E1 de caractérisation (et durant laquelle le contraste souhaité n'a pas été atteint). De préférence, le flux est ajusté de sorte que la durée de vie des porteurs de charge soit inférieure à 1ms, de préférence comprise entre 1ms (non-inclus) et 1µs (inclus).

### Ajustement mixte de la durée de vie des porteurs

Il est bien entendu possible de mettre en œuvre les deux options précédentes, c'est-à-dire d'utiliser un substrat témoin SBT qui a une durée de vie inférieure à celle des autres substrat SB de la chaine de production CP puis de le soumettre à un fort flux de photon lors de l'étape E1 de caractérisation. L'objectif reste le même : la durée de vie des porteurs de charge doit être faible lors de l'étape E1 de caractérisation.

Dans ce mode de réalisation, l'ajustement doit alors être compris comme la modification du substrat témoin SBT et du flux par rapport au flux ou au substrat témoin SBT utilisés lors de l'itération précédente de l'étape 1E1 de caractérisation (et durant laquelle le contraste souhaité n'a pas été atteint).

### Ajustement de la longueur d'onde utilisée

Dans un mode de réalisation, la longueur d'onde utilisée pour la caractérisation est modifiée de sorte à améliorer le contraste. En effet, la diminution de cette longueur d'onde induit une réduction de la profondeur de pénétration de la lumière dans le substrat témoin SBT, ce qui permet de concentrer la photogénération dans une zone proche de la face FA/FR éclairée du substrat témoin SBT. Ainsi, les porteurs de charge générés par des longueurs d'onde faibles auront, en moyenne, un chemin plus long à parcourir pour atteindre la face FR/FA non éclairée du substrat témoin SBT. Les défauts DE se trouvant sur la face FR/FA non éclairée auront donc statistiquement moins d'impact sur le signal mesuré pour des longueurs d'onde plus faibles, améliorant ainsi le contraste.

Dans ce mode de réalisation, l'ajustement doit alors être compris comme la diminution de la longueur d'onde par rapport à la longueur d'onde utilisée lors de l'itération précédente de l'étape 1E1 de caractérisation (et durant laquelle le contraste souhaité n'a pas été atteint).

### Effets de l'ajustement de ces paramètres sur le contraste

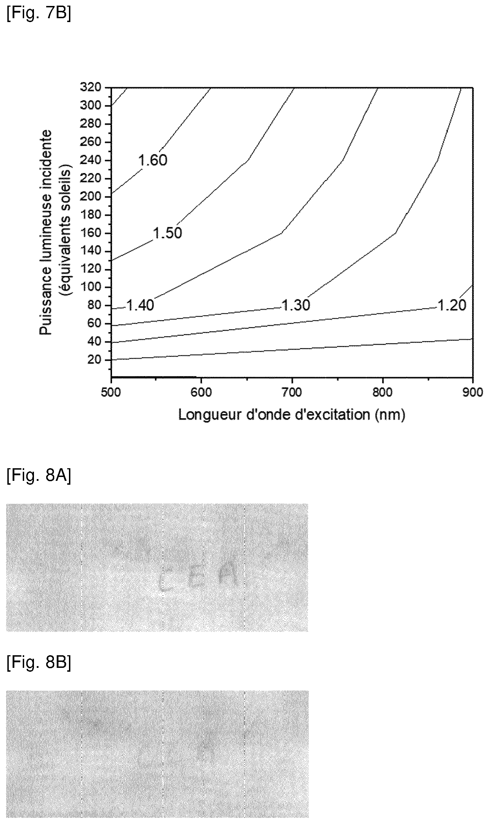

Les [Fig. 7A] à [Fig. 7B] illustrent l'influence des paramètres évoqués précédemment sur le contraste mesuré pour un défaut DE donné.

La [Fig. 7A] représente la valeur du contraste (valeur des contours) en fonction de la longueur d'onde utilisée et de la durée de vie des porteurs de charge. L'amélioration apportée au contraste par une diminution de la durée de vie des porteurs de charge ou de la longueur d'onde utilisée est clairement visible sur cette figure. A titre d'illustration, dans cet exemple, si l'utilisateur souhaite un contraste au moins égal à 1.5 et ne dispose que d'une source à 800 nm, alors il devra choisir une durée de vie des porteurs de charge inférieure à 0.2 ms.

La [Fig. 7B] représente la valeur du contraste (valeur des contours) en fonction de la longueur d'onde d'utilisée et de la puissance lumineuse (ou flux lumineux - équivalent soleil) utilisé pour la caractérisation par photoluminescence. Encore une fois, l'amélioration apportée au contraste par une augmentation du flux (et donc une diminution de la durée de vie des porteurs de charge) et la diminution de la longueur d'onde utilisée est clairement visible sur cette figure. A titre d'illustration, dans cet exemple, si l'utilisateur souhaite un contraste au moins égal à 1.5 et ne dispose que d'une source à 700 nm, alors il devra choisir un flux supérieur ou égal à 300 équivalents soleils. On notera cependant que, pour une même longueur d'onde, un flux de 50 équivalents soleils permet déjà d'obtenir un contraste supérieur à 1.1 normalement suffisant pour identifier la face du substrat témoin SBT sur laquelle se trouve un défaut DE.

### Illustration des avantages du procédé selon l'invention

Afin d'illustrer les avantages d'un procédé 100 selon l'invention, un substrat témoin SBT de silicium à très faible durée de vie des porteurs de charge (∼10µs - longueur de diffusion ∼100µm) a subi un dépôt d'une couche de passivation sur ses deux faces. Puis, à l'aide d'une pointe diamant, la couche de passivation a été localement retirée (pour former l'inscription « CEA ») sur l'une des faces de sorte à induire un défaut similaire à ceux générés lors des différentes manipulations subies par les substrats SB sur une chaine de fabrication CP. Ensuite, une image de photoluminescence de la face comprenant le défaut ([Fig. 8A]) et de la face opposée au défaut ([Fig. 8B]) ont été réalisées.

Le signal associé au défaut est clairement visible sur la [Fig. 8A] alors que ce dernier est fortement atténué sur la [Fig. 8B]. Autrement dit, le procédé selon l'invention permet d'obtenir un contraste élevé rendant très facile l'identification de la face sur laquelle est situé le défaut possible et donc sa position. Ce résultat est à comparer aux images obtenues avec un procédé selon l'état de l'art (cf. [Fig. 2] déjà introduite) à partir desquelles il n'est pas possible d'identifier la face associée au défaut considéré.

### Procédé de fabrication d'un dispositif semi-conducteur

Un deuxième aspect de l'invention concerne un procédé de fabrication d'un dispositif semi-conducteur comprenant une étape de mise en œuvre du procédé 100 de détermination de la position d'au moins une défectivité selon l'invention. Dans un mode de réalisation, le procédé de fabrication comprend en outre, avant l'étape de mise en œuvre du procédé 100 selon l'invention, une étape d'introduction d'un ou plusieurs substrats témoins SBT dans la chaine de fabrication, lesdits substrats témoins SBT ayant une faible durée de vie des porteurs de charge et étant utilisés pour la mise en œuvre du procédé 100 de détermination de la position d'au moins une défectivité selon l'invention.

Un tel procédé est particulièrement adapté à la fabrication de dispositifs photovoltaïques dans la mesure où ces derniers ont recours à des substrats ayant une durée de vie des porteurs de charge élevée et/ou une épaisseur de substrat très fine, rendant difficile l'identification de la face sur laquelle est située un défaut lorsque l'on utilise les solutions proposées dans l'état de la technique.

### Dispositif de détermination de la position d'au moins une défectivité selon l'invention

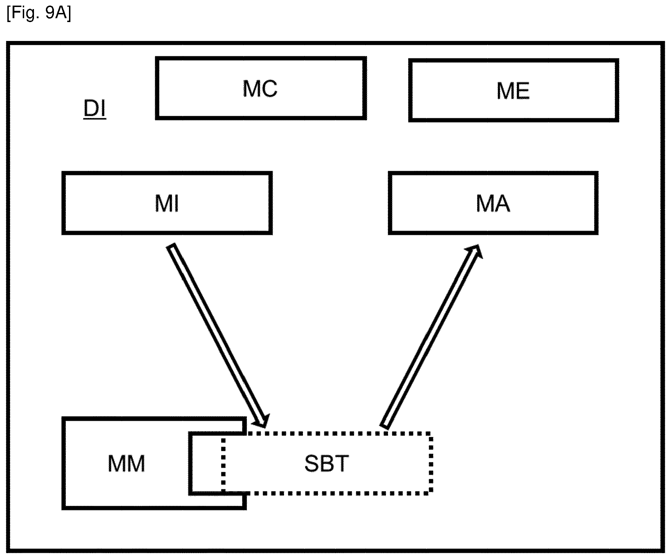

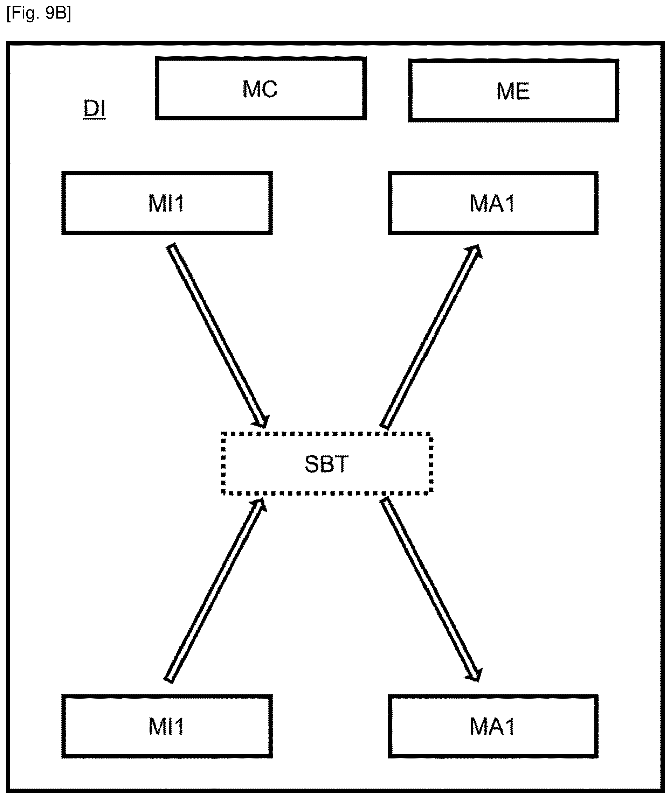

Un troisième aspect de l'invention illustré à la [Fig. 9A] et la [Fig. 9B] concerne un dispositif DI de détermination de la position d'au moins une défectivité. Ce dernier comprend les moyens configurés pour mettre en œuvre le procédé 100 selon un premier aspect de l'invention.

Dans un mode de réalisation illustré à la [Fig. 9A], le dispositif DI selon l'invention comprend un moyen d'illumination MI (par exemple une source Laser, une source LED ou bien encore une source polychromatique avec monochromateur) configuré pour illuminer la surface d'un substrat témoin ainsi qu'un moyen d'acquisition MA (par exemple un capteur CCD, de préférence associé à un filtre passe bande et/ou une ou plusieurs lentilles de différents grossissement) configuré pour acquérir le signal photoluminescent en provenance de la surface illuminée. Dans un mode de réalisation, le moyen d'illumination MI est configuré pour permettre la modulation du flux lumineux et/ou de la longueur d'onde utilisée. Ainsi, il est possible lors de l'étape de caractérisation de moduler la longueur d'onde et/ou le flux avec tous les avantages décrits précédemment. De préférence, dans ce mode de réalisation, le dispositif comprend également un moyen de manipulation MM (par exemple un mécanisme de ventouses sur un support rotatif) configurer pour retourner le substrat SBT témoin. Ainsi, les deux faces du substrat témoin SBT peuvent être illuminées successivement. Alternativement, le retournement du substrat témoin SBT peut être effectué manuellement par un opérateur.

Dans un mode de réalisation, le dispositif DI comprend deux moyens d'illumination MM1/MM2 tels que décrits précédemment, les deux moyens d'illumination MM1/MM2 étant agencés de sorte que lorsque le premier moyen d'illumination MM1 est configuré pour éclairer la première face du substrat témoin SBT le deuxième moyen d'illumination MM2 est configuré pour éclairer la deuxième face du substrat témoin SBT avec des paramètres identiques au premier moyen d'illumination MM1. Dans ce mode de réalisation, le dispositif comprend également deux moyens d'acquisition MA1/MA2, chaque moyen d'acquisition étant configuré pour acquérir le signal photoluminescent en provenance de l'une des surfaces illuminées différente de l'autre moyen d'acquisition. De plus, l'illumination du substrat témoin SBT par le premier moyen d'illumination MM1 et par le deuxième moyen d'illumination MM2 ne se fait pas en même temps.

Dans un mode de réalisation, le moyen d'acquisition MA est configuré pour acquérir simultanément une image de chaque face du substrat SBT. Dans ce mode de réalisation, l'illumination peut se faire sur l'une des deux faces et l'acquisition simultanément sur les deux faces sans nécessité un retournement du substrat SBT.

Le dispositif comprend en outre un moyen de calcul MC (par exemple un processeur ou une carte ASIC) associé à une mémoire ME (par exemple une mémoire RAM éventuellement accompagnée d'un disque dur) comprenant les instructions nécessaires à la mise en œuvre d'un procédé 100 selon un premier aspect de l'invention, notamment le traitement du signal acquis de sorte à déterminer l'amplitude et le contraste mesurés lors de la caractérisation. La mémoire ME est également configurée pour stocker les données nécessaires à cette mise en œuvre. Dans un mode de réalisation, le moyen de calcul MC est configuré pour commander le ou les moyens d'illumination MI/MI1/MI2, le ou les moyens d'acquisition MA/MA1/MA2 et le ou les moyens de manipulation MM du substrat témoin SBT.

Dans un mode de réalisation, le dispositif DI comprend également un moyen d'affichage (par exemple un écran) permettant d'afficher, sur instruction du moyen de calcul, la ou les images issues du procédé 100 selon un premier aspect de l'invention, et notamment de l'étape 1E1 de caractérisation.

Dans un mode de réalisation, le dispositif DI comprend également un moyen de saisie (par exemple un clavier, une souris ou bien encore un écran tactile) configuré pour recevoir d'un opérateur ou transmettre à un opérateur les données nécessaires à la mise en œuvre d'un procédé 100 selon un premier aspect de l'invention.

Dans un mode de réalisation, le dispositif comprend également un moyen d'alignement de sorte à permettre une comparaison plus aisée des images acquises pour chaque substrat SBT.

## Revendications

1. Procédé (100) de détermination de la position d'au moins une défectivité sur des substrats semi-conducteurs (SB) dans une chaine de production (CP), le procédé (100) étant mis en œuvre à l'aide d'au moins un substrat témoin (SBT) comportant une première face (FA) et une deuxième face (FR), le procédé (100) comprenant, pour chaque substrat témoin (SBT) :
- une étape (E1) de caractérisation par photoluminescence de chaque face du substrat témoin (SBT) en au moins un point de la chaine de production (CP), cette étape (E1) de caractérisation comprenant, pour au moins un défaut (DE) présent sur le substrat témoin (SBT) ;
∘une sous-étape (E11) de mesure du signal photoluminescent du défaut (DE) lorsque la première face (FA) du substrat témoin (SBT) est illuminée de sorte à déterminer une première amplitude (A_{FA}) associée au défaut (DE) mesurée;
∘une sous-étape (E12) de mesure du signal photoluminescent du défaut (DE) lorsque la deuxième face (FR) du substrat témoin (SBT) est illuminée de sorte à déterminer une deuxième amplitude (A_{FR}) associé au défaut (DE) mesurée ;
l'amplitude étant le rapport entre le signal mesuré sur une région sans défaut et le signal mesuré sur le défaut, la durée de vie des porteurs de charge lors de la caractérisation et/ou la longueur d'onde utilisée lors de la caractérisation étant ajustées de sorte que le rapport entre l'amplitude la plus élevée et l'amplitude la plus faible, dit contraste de mesure (CAV/AR), est supérieur à une valeur seuil, elle-même supérieure ou égale à 1 ;
- à partir de la valeur des amplitudes déterminées précédemment, une étape (E2) de détermination de la position, sur chaque substrat témoin (SBT), de chaque défaut (DE) considérée lors de l'étape (E1) de caractérisation la face associée à l'amplitude la plus élevée pour chaque défaut étant la face sur laquelle est situé le défaut considéré ;
- à partir de la position associée à chaque défaut (DE) présents sur chaque substrat témoin (SBT), une étape (E3) de détermination de la position associées à chaque défectivité.

2. Procédé (100) selon la revendication précédente dans lequel une intensité lumineuse supérieure à 20 équivalents soleils est utilisée lors de l'étape (E1) de caractérisation de sorte à induire, lors de cette étape (E1), une baisse de la durée de vie des porteurs de charge dans le substrat témoin (SBT) par augmentation du taux de recombinaison par effet Augier.

3. Procédé (100) selon l'une des revendications précédentes dans lequel le substrat témoin (SBT) est un substrat ayant une faible durée de porteur de charge.

4. Procédé (100) selon l'une des revendications précédentes dans lequel la longueur de diffusion des porteurs de charge du substrat témoin (SBT) lors de l'étape (E1) de caractérisation est inférieure à l'épaisseur du substrat témoin (SBT).

5. Procédé (100) selon l'une des revendications précédentes dans lequel, lors de l'étape (E1) de caractérisation, l'ajustement de la durée de vie des porteurs de charge et de la longueur d'onde utilisée est effectué en deux phases :
- une première phase lors de laquelle l'ajustement n'est effectué que sur la durée de vie des porteurs de charge ; et
- lorsque l'ajustement de la durée de vie des porteurs de charge n'est plus possible et que le contraste est inférieur à la valeur seuil, une deuxième phase durant laquelle l'ajustement est effectué sur la longueur d'onde utilisée.

6. Procédé de fabrication d'un dispositif semi-conducteur à l'aide d'une chaine de fabrication (CP), le procédé de fabrication comprenant, en au moins un point de la chaine de fabrication (CP), une étape de mise en œuvre du procédé (100) de détermination de la position d'au moins une défectivité selon l'une des revendications précédentes.

7. Procédé selon la revendication précédente dans lequel le dispositif semi-conducteur est fabriqué à partir d'un substrat à grande durée de vie des porteurs de charge et dans lequel l'étape de mise en œuvre du procédé (100) selon l'une des revendications 1 à 5 est précédée d'une étape d'introduction, dans la chaine de fabrication, d'au moins un substrat témoin à faible durée de vie des porteurs de charge.

8. Procédé selon l'une des deux revendications précédentes dans lequel le dispositif semi-conducteur est un dispositif photovoltaïque.

9. Dispositif (DI) de détermination par photoluminescence de la position d'au moins une défectivité sur des substrats semi-conducteurs d'une chaine de fabrication (CP) comprenant au moins un moyen d'illumination (MI/MI1/MI2), au moins un moyen d'acquisition (MA/MA1/MA2) et des moyens configurés pour mettre en œuvre un procédé (100) selon l'une des revendications 1 à 6.

10. Programme d'ordinateur comprenant des instructions qui conduisent le dispositif (DI) selon la revendication précédente à exécuter les étapes du procédé (100) selon l'une des revendications 1 à 6.

11. Support lisible par ordinateur, sur lequel est enregistré le programme d'ordinateur selon la revendication précédente.
